(19) Europäisches Patentamt / European Patent Office / Office européen des brevets

(11) **EP 2 712 268 A2**

(12) **EUROPEAN PATENT APPLICATION**

(43) Date of publication:
**26.03.2014 Bulletin 2014/13**

(51) Int Cl.:
***H05B 33/08*** (2006.01)

(21) Application number: **13157847.8**

(22) Date of filing: **05.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.09.2012 JP 2012207307**

(71) Applicant: **Toshiba Lighting & Technology Corporation
Yokosuka-shi
Kanagawa 237-8510 (JP)**

(72) Inventors:
• **Otake, Hirokazu
Kanagawa 237-8510 (JP)**
• **Ooto, Katsuya
Tokyo 198-0024 (JP)**

(74) Representative: **Bokinge, Ole
Awapatent AB
Junkersgatan 1
582 35 Linköping (SE)**

(54) **Power supply device and luminaire**

(57) In a power supply device (1) including a switching element (12) and a control section (11) configured to control the switching element (12), the control section (11) receives an input of a first signal fluctuating according to an output voltage of the power supply device (1) and fixed with respect to an input voltage of the power supply device (1) and a second signal, the amplitude of which fluctuates according to the input voltage of the power supply device (1), and controls ON or OFF of the switching element (12) according to time until a value of the second signal reaches a value of the first signal.

FIG.1

EP 2 712 268 A2

**Description**

FIELD

Embodiments described herein relate generally to a power supply device, a luminaire, and a power supplying method.

BACKGROUND

As a power supply device for various electronic apparatuses in the past, there is known a power supply device including a rectifying circuit such as a diode bridge circuit and a smoothing circuit such as a capacitor and configured to convert an alternating-current voltage into a direct-current voltage (in the following explanation, sometimes referred to as "AC-DC power supply device").

In the countries in the world or in one country, alternating-current voltages are supplied at a plurality of voltage values (100 to 240 [V]) as commercial alternating-current power supplies because of voltage standards and the like.

Among AC-DC power supply devices, there is a AC-DC power supply device including a power factor improving circuit in order to improve a power factor. The power factor improving circuit in the past includes, for example, a coil and a diode and a switching element connected to the coil in parallel. Since the AC-DC power supply device in the past includes such a power factor improving circuit, the AC-DC power supply device can be adopted to a plurality of alternating-current voltages. That is, a range of power supply voltages is increased.

Some power supply device is supplied with a direct-current voltage. Like the commercial alternating-current power supply, in a direct-current power supply, a plurality of voltage values (100 to 240 [V]) are used.

However, a direct-current input power supply device (a DC-DC power supply device) in the past controls timing of ON or OFF of a switching element of the power supply device by, after detecting fluctuation in an input voltage as fluctuation in an output voltage, comparing the detected output voltage and a value fixed with respect to the input voltage. Therefore, it takes time until the fluctuation in the input voltage is reflected on the control of the switching element.

DESCRIPTION OF THE DRAWINGS

FIG. 1 is a block diagram showing an example of a power supply device according to a first embodiment;
FIG. 2 is a diagram showing a circuit configuration example of the power supply device;
FIG. 3 is a diagram for explaining a relation between a first signal and a second signal formed in a forming section;
FIG. 4 is a diagram for explaining a relation between the second signal formed in the forming section and a period in which a switching element is on and a relation between ON and OFF of the switching element; and
FIG. 5 is a diagram showing another circuit configuration example of a power supply device.

DETAILED DESCRIPTION

It is an object of the exemplary embodiment to provide a power supply device, a luminaire, and a power supplying method that can be adapted to a plurality of input direct-current voltages.

Power supply devices, luminaires, and power supplying methods according to embodiments are explained below with reference to the drawings. In the embodiments, components having the same functions are denoted by the same reference numerals and signs and redundant explanation of the components is omitted.

First Embodiment

Configuration of a power supply device

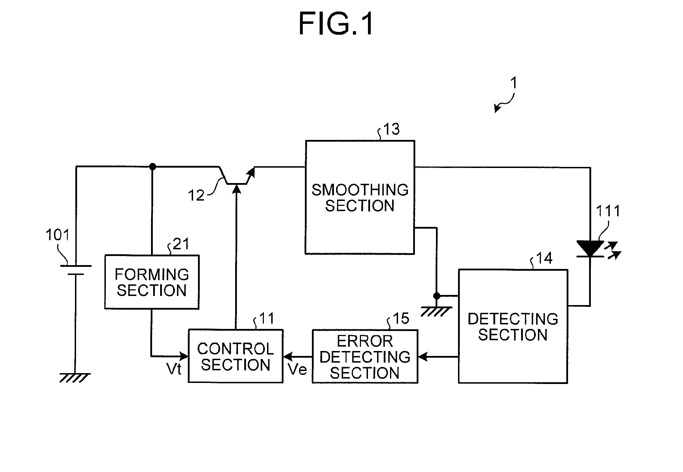

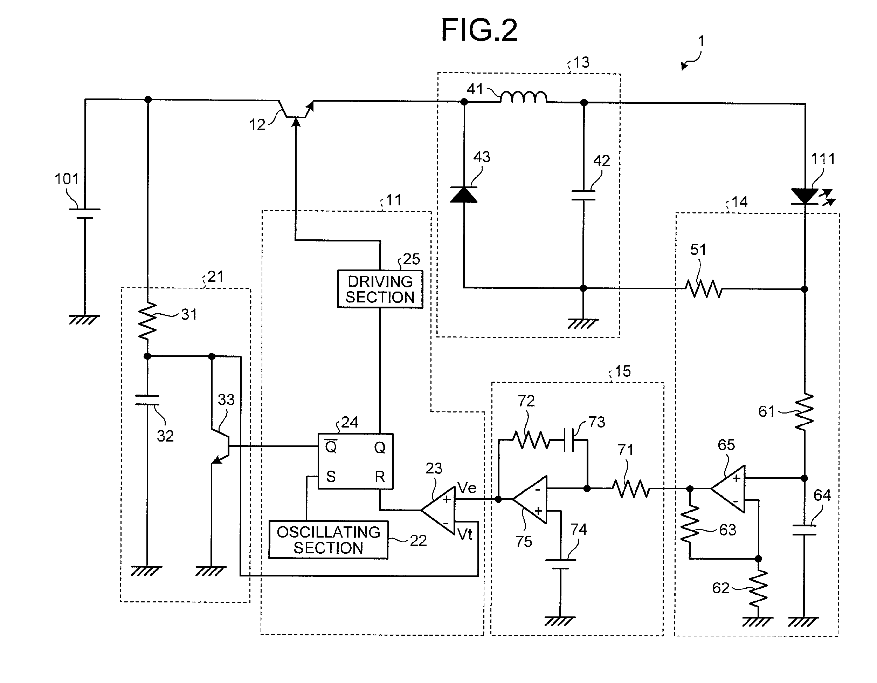

FIG. 1 is a block diagram showing an example of a power supply device according to a first embodiment. FIG. 2 is a diagram showing a circuit configuration example of the power supply device according to the first embodiment. In FIG. 1, a power supply device 1 includes a control section 11, a switching element 12, a smoothing section 13, a detecting section 14, an error detecting section 15, and a forming section 21. In FIG. 1, a luminaire including the power supply device 1 and an LED 111, which is a light-emitting element, is shown.

The power supply device 1 is connected to a direct-current power supply 101 via an input terminal (not shown in the figure). The power supply device 1 receives an input of a direct-current voltage. The control section 11 is connected to an input terminal (not shown in the figure) of the power supply device 1 via the forming section 21. The switching element 12 is connected to the direct-current power supply 101 in series. The smoothing section 13 is connected to the switching element 12 in series. The LED 111 and the detecting section 14 are sequentially connected to the smoothing section 13 in series.

The detecting section 14 detects an electric current flowing to the LED 111 or a voltage applied to the LED 111 and inputs the electric current or the voltage to the error detecting section 15 as a detection signal. The error detecting section 15 is connected to the control section 11. The error detecting section 15 inputs a first signal Ve to the control section 11.

The forming section 21 forms a second signal Vt using an input direct-current voltage and inputs the formed second signal Vt to the control section 11.

The control section 11 is connected to a gate of the switching element 12. The control section 11 generates, on the basis of the first signal Ve input from the error detecting section 15 and the second signal Vt input from the forming section 21, a control signal for controlling the switching element 12 to ON or OFF. The control signal is input to the gate of the switching element 12. The switching element 12 is controlled by the control section 11.

Specifically, as shown in FIG. 2, the forming section 21 configured to form the second signal Vt, the amplitude of which fluctuates according to an input voltage of the direct-current power supply 101, is connected between the control section 11 and the direct-current power supply 101. The control section 11 includes an oscillating section 22, a comparator 23, a flip-flop 24, and a driving section 25. The forming section 21 includes a resistor 31, a capacitor 32, and a switching element 33.

One end of the resistor 31 is connected to an input terminal (not shown in the figure) of the power supply device 1. The other end of the resistor 31 is connected to one end of the capacitor 32. The one end of the capacitor 32 is connected to the resistor 31. The other end of the capacitor 32 is connected to the ground. A collector terminal of the switching element 33 and an inverting input terminal of the comparator 23 are connected in parallel to each other to a connection line for the resistor 31 and the capacitor 32. An emitter terminal of the switching element 33 is connected to the ground. A base terminal of the switching element 33 is connected to a Q bar ($Q^-$) output terminal of the flip-flop 24. A non-inverting input terminal of the comparator 23 is connected to the error detecting section 15. An output terminal of the comparator 23 is connected to a reset (R) terminal of the flip-flop 24. The R terminal of the flip-flop 24 is connected to the output terminal of the comparator 23. A set (S) terminal of the flip-flop 24 is connected to the oscillating section 22. A Q output terminal of the flip-flop 24 is connected to the driving section 25. The $Q^-$ output terminal of the flip-flop 24 is connected to a base of the switching element 33.

The forming section 21 receives an input of the input direct-current voltage and a Q- output of the flip-flop 24 and forms the second signal Vt, the amplitude of which fluctuates according to the input voltage of the direct-current power supply 101.

A forming process of the second signal Vt by the forming section 21 is explained in detail. The oscillating section 22 outputs a reference frequency signal to an S terminal of the flip-flop 24. The reference frequency signal includes, for example, a plurality of pulses, rising timings of which are apart from one another by a predetermined period T1. Consequently, the flip-flop 24 is set at each period T1. When the flip-flop 24 is set, the Q output and the Q- output respectively change to High and Low.

When the Q- output of the flip-flop 24 is set to Low by the oscillating section 22, the switching element 33 is turned off, charges are charged in the capacitor 32 by the input direct-current voltage, and the second signal Vt rises. When a signal is input to the R terminal of the flip-flop 24 from the comparator 23, the Q- output of the flip-flop 24 is set to High and the switching element 33 is turned on. In a period in which the switching element 33 is on, the charges of the capacitor 32 are discharged via the switching element 33. Consequently, the second signal Vt falls. The rising and the falling of the second signal Vt are repeated in this way, whereby the second signal Vt is formed.

The amplitude of the second signal Vt fluctuates according to the input voltage of the direct-current power supply 101. Therefore, a rising ratio per unit time of the second signal Vt, i.e., a gradient of a voltage rise is larger as the input direct-current voltage is larger. Time required from timing when the discharging from the capacitor 32 is switched to the charging in the capacitor 32 until the capacitor 32 reaches a predetermined voltage value is shorter as the input direct-current voltage is larger.

The resistor 31 is disposed in order to adjust the second signal Vt as a voltage level at a connection point of the resistor 31 and the capacitor 32, i.e., a voltage level applied to the inverting input terminal of the comparator 23. That is, the resistor 31 is disposed for adjustment of a level of the second signal Vt.

The first signal Ve is input to the non-inverting input terminal of the comparator 23. The second signal Vt is input to the inverting input terminal of the comparator 23. The comparator 23 compares the first signal Ve and the second signal Vt and outputs a signal corresponding to a comparison result to the R terminal of the flip-flop 24. Specifically, if the second signal Vt is lower than the first signal Ve, the comparator 23 changes the output to Low. On the other hand, if the second signal Vt is equal to or higher than the first signal Ve, the comparator 23 changes the output to High. Consequently, the flip-flop 24 is reset.

The flip-flop 24 receives an input of the reference frequency signal from the oscillating section 22 and the comparison result signal from the comparator 23. The flip-flop 24 controls ON and OFF timings of the switching element 33 on the basis of the reference frequency signal and the comparison result signal. That is, the flip-flop 24 controls rising start timing of the second signal Vt according to the reference frequency signal from the oscillating section 22 and controls falling start timing of the second signal Vt according to the comparison result signal from the comparator 23.

The flip-flop 24 controls, on the basis of the reference frequency signal and the comparison result signal, the width of a pulse output from the driving section 25. That is, the flip-flop 24 controls ON or OFF timing of the switching element 12.

In detail, the flip-flop 24 is a flip-flop of a set-reset type. The flip-flop 24 is set at every T1 according to the reference frequency signal. Consequently, the Q output and the Q- output respectively change to High and Low. The flip-flop 24 is reset if the second signal Vt is equal to or higher than the first signal Ve. The Q output and the Q- output respectively change to Low and High.

The driving section 25 outputs an ON or OFF control signal to a base of the switching element 12 on the basis of the Q output of the flip-flop 24. That is, the driving section 25 outputs a pulse signal, the pulse width of which is adjusted on the basis of the Q output of the flip-flop 24, to a base terminal of the switching element 12. That is, an on-duty is controlled. Specifically, if the Q output changes from Low to High, the driving section 25 starts the output of the pulse signal. If the Q output changes from High to Low, the driving section 25 stops the output of the pulse signal. That is, as a period in which the Q output is in the HIGH state is longer, the pulse width is larger.

A collector terminal of the switching element 12 is connected to an input terminal (not shown in the figure) of the power supply device 1 and connected to the smoothing section 13. A base terminal of the switching element 12 is connected to the driving section 25.

The switching element 12 is subjected to ON or OFF control on the basis of an ON or OFF control signal received from the driving section 25. Specifically, in a state in which the switching element 12 is receiving the pulse signal from the driving section 25, the switching element 12 changes to the ON state and allows the input direct-current voltage to be input to the smoothing section 13. In a state in which the switching element 12 is not receiving the pulse signal from the driving section 25, the switching element 12 changes to the OFF state and does not allow the input direct-current voltage to be input to the smoothing section 13. That is, it is possible to control electric energy input to the smoothing section 13 by adjusting time in which the switching element 12 is on.

The smoothing section 13 smoothes the input voltage and outputs a smoothed direct-current voltage to a power supply target. The power supply target is the LED 111.

Specifically, the smoothing section 13 includes, as shown in FIG. 2, a coil 41, a capacitor 42, and a diode 43, which is a free wheel diode. One end of the coil 41 is connected to an emitter terminal of the switching element 12 and a cathode terminal of the diode 43. The other end of the coil 41 is connected to one end of the capacitor 42 and an output terminal (not shown in the figure) of the power supply device 1. The one end of the capacitor 42 is connected to the coil 41 and the output terminal (not shown in the figure) of the power supply device 1. The other end of the capacitor 42 is connected to the ground. The cathode terminal of the diode 43 is connected to the coil 41 and the emitter terminal of the switching element 12 in parallel.

The detecting section 14 detects an electric current flowing through the LED 111, which is the power supply target, and outputs a current detection value as a detection signal.

The detecting section 14 includes, as shown in FIG. 2, resistors 51, 61, 62, and 63, a capacitor 64, and a current sense amplifier 65. One end of the resistor 51 is connected to a connection line for the LED 111 and the current detecting section 14. The other end of the resistor 51 is connected to the ground. One end of the resistor 61 is connected to a connection point of the resistor 51 and the LED 111. The other end of the resistor 61 is connected to one end of the capacitor 64 and a non-inverting input terminal of the current sense amplifier 65. The one end of the capacitor 64 is connected to a connection line for the resistor 61 and the non-inverting input terminal of the current sense amplifier 65. The other end of the capacitor 64 is connected to the ground. One end of the resistor 62 is connected to the resistor 63 and an inverting input terminal of the current sense amplifier 65. The other end of the resistor 62 is connected to the ground. One end of the resistor 63 is connected to a connection line for the resistor 62 and the inverting input terminal of the current sense amplifier 65. The other end of the resistor 63 is connected to a connection line for an output terminal of the current sense amplifier 65 and the error detecting section 15. The potential in the connection line for the LED 111 and the detecting section 14 is changed to a value corresponding to the electric current flowing through the LED 111.

Specifically, the detecting section 14 outputs a voltage corresponding to a voltage in the connection line of the LED 111 and the detecting section 14 as a detection signal. In detail, the voltage in the connection line for the LED 111 and the detecting section 14 is subjected to level adjustment by the resistor 61, whereby a voltage $V_2$ applied to the non-inverting input terminal of the current sense amplifier 65 is formed. The current sense amplifier 65 amplifies the voltage $V_2$ and outputs the amplified voltage $V_2$. That is, when a voltage at one end of the resistor 62 on the opposite side of the current sense amplifier 65 is represented as $V_1$ ($V_1=0$) and resistance values of the resistors 62 and 63 are respectively represented as $R_1$ and $R_2$, an output voltage $V_{out}$ of the current sense amplifier 65 is represented by the following expression:

$$V_{out} = (1 + R_2/R_1) \times (V_2 - V_1)$$

$V_2$ is a value corresponding to the potential in the connection line for the LED 111 and the detecting section 14. The potential in the connection line for the LED 111 and the detecting section 14 is a value corresponding to the electric current flowing through the LED 111. Therefore, $V_2$ is a value corresponding to the electric current flowing through the LED 111.

The error detecting section 15 detects, on the basis of a detection signal received from the detecting section 14 as a current detection value and a current reference, an error between a current target value and a value of the electric current actually flowing through the LED 111. The error detecting section 15 outputs, as an error signal, the first signal Ve that fluctuates according to an output current of the power supply device 1, i.e., the current value flowing through the LED 111 and is fixed with respect to an input voltage of the power supply device 1.

The error detecting section 15 includes resistors 71 and 72, a capacitor 73, a reference power supply 74, and an error amplifier 75. One end of the resistor 71 is connected to the output terminal of the current sense amplifier 65. The other end of the resistor 71 is connected to an inverting input terminal of the error amplifier 75 and the capacitor 73 in parallel. One end of the capacitor 73 is connected to a connection line for the resistor 71 and the inverting input terminal of the error amplifier 75. The other end of the capacitor 73 is connected to one end of the resistor 72. The one end of the resistor 72 is connected to the one end of the capacitor 73. The other end of the resistor 72 is connected to a connection line for an output terminal of the error amplifier 75 and the control section 11. The reference power supply 74 is connected to a non-inverting input terminal of the error amplifier 75.

Specifically, the error amplifier 75 amplifies a difference voltage between a voltage of the reference power supply 74 (i.e., a reference voltage) and an output voltage from the detecting section 14 (i.e., a current detection value output as a detection signal) and outputs an amplified error signal to the control section 11 as the first signal Ve. At this point, phase compensation is executed by a phase compensator formed by the resistor 72 and the capacitor 73.

Operation of the power supply device

The operation of the power supply device 1 having the configuration explained above is explained. In particular, processing for forming the second signal Vt is explained.

In the control section 11, the forming section 21 receives an input of the input direct-current voltage and the Q⁻ output of the flip-flop 24 and forms the second signal Vt.

Specifically, in a period in which the Q⁻ output of the flip-flop 24 is Low and the switching element 33 is OFF, charges are charged in the capacitor 32 by the input direct-current voltage and the second signal Vt rises. When a signal is input to the R terminal of the flip-flop 24 from the comparator 23, the flip-flop 24 is reset, the Q⁻ output changes to High, and the switching element 33 is turned on. In a period in which the switching element 33 is on, the charges of the capacitor 32 are discharged via the switching element 33. Consequently, the second signal Vt falls. The rising and the falling of the second signal Vt are repeated, whereby the second signal Vt is formed.

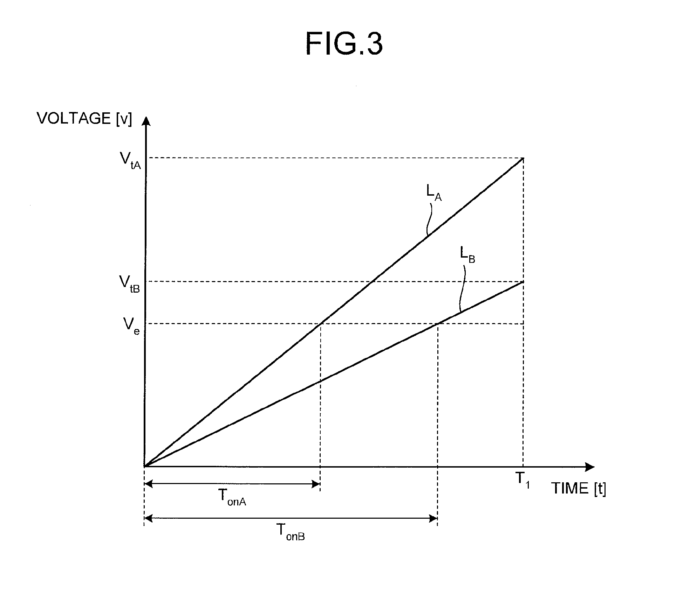

FIG. 3 is a diagram for explaining a relation between the input direct-current voltage and the second signal Vt formed in the forming section 21.

In FIG. 3, $L_A$ indicates a rising straight line of the second signal Vt in the case of an input direct-current voltage A and $L_B$ indicates a rising straight line of the second signal Vt in the case of an input direct-current voltage B smaller than the input direct-current voltage A. An error signal, i.e., an output voltage of the error detecting section 15 is indicated as the first signal Ve. $T_{onA}$ indicates time required until the second signal Vt rises to be equal to the first signal Ve in the case of the input direct-current voltage A. $T_{onB}$ indicates time required until the second signal Vt rises to be equal to the first signal Ve in the case of the input direct-current voltage B.

As shown in FIG. 3, $T_{onA} < T_{onB}$ holds. That is, the time required until the second signal Vt rises to be equal to the first signal Ve is shorter as the input direct-current voltage is larger.

$T_{onA}$ and $T_{onB}$ correspond to a period in which the switching element 12 is on. That is, $T_{onA}$ and $T_{onB}$ correspond to a period in which a voltage is output from the switching element 12 to the smoothing section 13. Therefore, in the power supply device 1, control is performed such that, as the input direct-current voltage is smaller, the period in which a voltage is output from the switching element 12 to the smoothing section 13 is longer, i.e., output electric power is larger.

Such feed-forward control is performed, whereby it is possible to stabilize the first signal Ve, which is an output voltage of the error detecting section 15, i.e., substantially fix the first signal Ve irrespective of a value of the input direct-current voltage. A reason for this is as explained below.

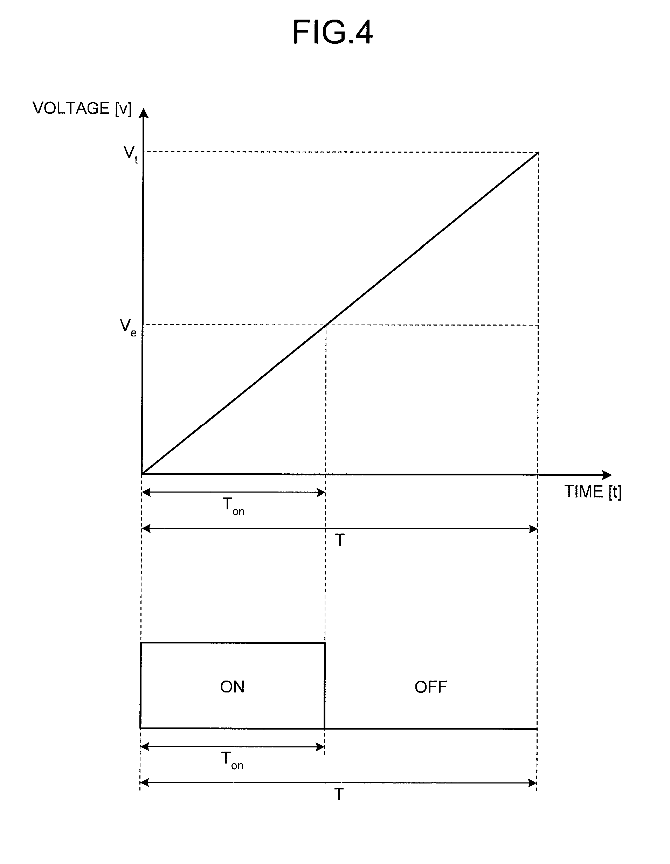

An upper figure of FIG. 4 is a figure showing a relation between the second signal Vt formed by the forming section 21 and the period in which the switching element 12 is on . A lower figure of FIG. 4 is a figure showing a relation between ON and OFF of the switching element 12.

In the upper figure of FIG. 4, Vt indicates a value of the second signal and Ve indicates a value of the error signal, i.e., the first signal, which is the output voltage of the error detecting section 15. $T_{on}$ indicates the time required until the second signal Vt rises to be equal to the first signal Ve. As shown in the lower figure of FIG. 4, $T_{on}$ corresponds to the period in which the switching element 12 is on. T indicates a period of a pulse wave based on the reference frequency signal from the oscillating section 22.

In this case, since Ve:$T_{on}$=Vt:T holds, $T_{on}$/T=Ve/Vt also holds.

$T_{on}$/T is an on-duty ratio. Therefore, when the on-duty ratio is represented as $D_{on}$, $D_{on}$ can be represented by the following Expression (1):

$$D_{on}=Ve/Vt \qquad (1)$$

In the case of falling voltage DC/DC, the on-duty ratio $D_{on}$ can be represented by the following Expression (2):

$$D_{on}=V_{OUT}/V_{IN} \qquad (2)$$

$V_{OUT}$ indicates an output voltage and $V_{IN}$ indicates an input voltage.

From Expression (1) and Expression (2), the following Expression (3) holds:

$$V_{OUT}/V_{IN}=Ve/Vt \qquad (3)$$

Expression (3) is transformed into the following Expression (4):

$$Ve=(V_{OU}T/V_{IN})\times Vt \qquad (4)$$

If Vt is proportional to the input voltage $V_{IN}$, Vt can be represented by the following Expression (5) using a proportionality coefficient k.

$$Vt=k\times V_{IN} \qquad (5)$$

Therefore, from Expression (4) and Expression (5), Ve is represented by the following Expression (6):

$$Ve=(V_{OUT}/V_{IN})\times k\times V_{IN}=k\times V_{OUT} \qquad (6)$$

Therefore, the first signal Ve, which is the output voltage of the error detecting section 15, does not fluctuate according to the input direct-current voltage $V_{IN}$.

Consequently, the second signal Vt that fluctuates according to the input direct-current voltage, i.e., has a gradient corresponding to the input direct-current voltage is formed. Pulse width modulation is performed on the basis of a result obtained by comparing, with the comparator 23, the second signal Vt and the first signal Ve that is fixed with respect to a value of the input direct-current voltage and does not fluctuate as an output voltage of the error detecting section 15.

Usually, if an input voltage is different, a phase characteristic changes. Therefore, if it is attempted to adapt the power supply device to a plurality of different input voltages, usually, the configuration of the phase compensator is complicated.

However, by performing the control explained above, it is possible to substantially fix the first signal Ve, which is the output voltage of the error detecting section 15, irrespective of a value of the input direct-current voltage. Therefore, it is possible to simplify the configuration of the phase compensator.

A value of the input voltage is not involved in a gain of a feedback loop as explained below.

Expression (2) is transformed into Expression (7).

$$V_{OUT}=D_{on}\times V_{IN} \qquad (7)$$

Expression (7) is partially differentiated as Expression (8).

$$\Delta V_{OUT} = \frac{\partial V_{OUT}}{\partial D_{ON}} \times \Delta D_{ON} + \frac{\partial V_{OUT}}{\partial V_{IN}} \times \Delta V_{IN} \qquad (8)$$

where holds

$$\frac{\partial V_{OUT}}{\partial D_{ON}} = V_{IN}, \frac{\partial V_{OUT}}{\partial V_{IN}} = D_{ON} \, .$$

Therefore, Expression (8) can be transformed into Expression (9).

$$\Delta V_{OUT} = V_{IN} \times \Delta D_{ON} + D_{ON} \times \Delta V_{IN} \qquad (9)$$

From Expression (1), Expression (10) holds.

$$\Delta D_{ON} = \frac{1}{V_t} \times \Delta V_e \qquad (10)$$

From Expression (9) and Expression (10), Expression (11) holds.

$$\Delta V_{OUT} = \frac{V_{IN}}{V_t} \times \Delta V_e + D_{ON} \times \Delta V_{IN} \qquad (11)$$

Therefore, if Vt is proportional to the input voltage $V_{IN}$, Expression (11) can be transformed into Expression (12).

$$\Delta V_{OUT} = k \times \Delta D_e + D_{ON} \times \Delta V_{IN} \qquad (12)$$

In this way, it is seen that a value of the input direct-current voltage $V_{IN}$ is not involved in the gain of the feedback loop. Therefore, with the power supply device 1, stable control is realized over a wide input voltage range.

As explained above, according to the first embodiment, the control section 21 of the power supply device 1 receives an input of the first signal Ve fixed with respect to an input voltage of the power supply device 1 and the second signal Vt, the amplitude of which fluctuates according to the input voltage of the power supply device 1. The control section 21 controls ON or OFF of the switching element 12 according to time until a value of the second signal Vt reaches a value of the first signal Ve. Consequently, it is possible to reduce time until fluctuation in the input voltage is reflected on the control of the switching element compare with the time required when timing of ON or OFF of the switching element of the power supply device is controlled by, after detecting fluctuation in the input voltage as fluctuation in an output voltage, comparing the fluctuation with a value fixed with respect to the input voltage.

Irrespective of a voltage value of a connected direct-current voltage power supply, it is possible to stabilize the gain of the feedback loop. That is, it is possible to realize a power supply device that can be adapted to a plurality of input direct-current voltages respectively having different voltage values.

Other Embodiments

[1] In the above explanation, an electric current flowing to the LED 111 is detected in the feedback loop and a detected current value is used for the first signal Ve. However, the first signal Ve is not limited to this. A voltage value across both the ends of the LED 111 may be used for error detection.

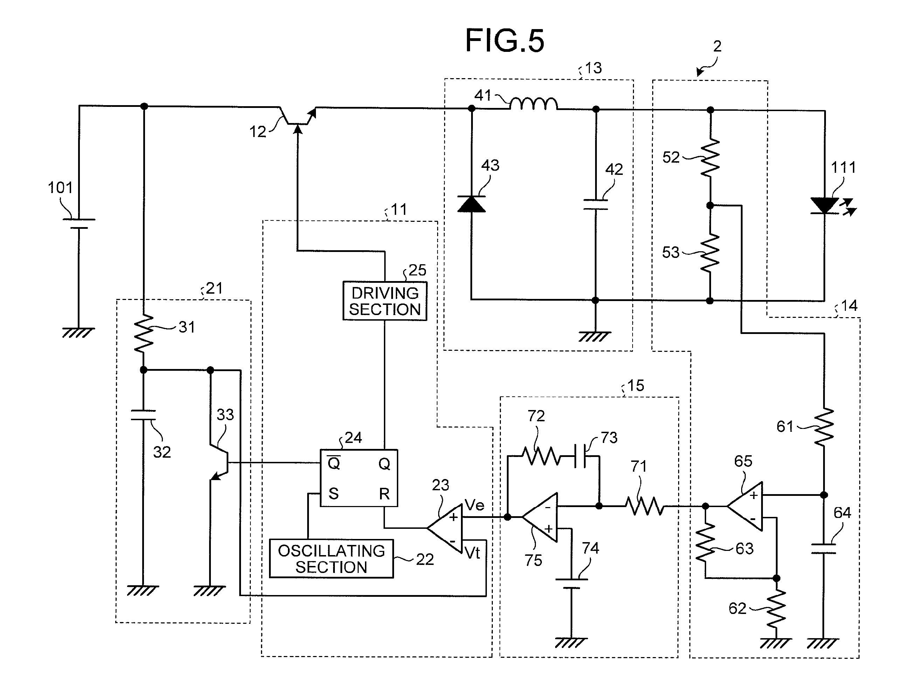

FIG. 5 is a diagram showing another circuit configuration example of a power supply device. In FIG. 5, the power supply device 2 includes a resistor 52 and a resistor 53. The resistor 52 and the resistor 53 are connected in series. Both ends of the resistor 52 and the resistor 53 are respectively connected to both ends of the LED 111 in parallel. In the power supply device 2, the resistor 61 of the detecting section 14 is connected by a connection line for the resistor 52 and the resistor 53. That is, a voltage across both the ends of the LED 111 is divided by the resistor 52 and the resistor 53 and the divided voltages are input to the detecting section 14. In other words, in the power supply device 2, reference numeral 14 denotes a voltage detecting section.

[2] In the above explanation, the load is explained as the LED 111. However, the load is not limited to this. The load may be a load controlled by a constant current. The power supply device 1 or 2 may be used for driving of an organic EL as a load.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

**Claims**

1.  A power supply device (1, 2) comprising:

    a switching element (12); and
    a control section (11) configured to control the switching element (12), wherein
    the control section (11) receives an input of a first signal fixed with respect to an input voltage of the power supply device (1, 2) and a second signal, amplitude of which fluctuates according to the input voltage of the power supply device (1, 2), and controls ON or OFF of the switching element (12) according to time until a value of the second signal reaches a value of the first signal.

2.  The device (1, 2) according to claim 1, further comprising a forming section (21) connected to the control section (11) and configured to form the second signal on the basis of the input voltage and input the second signal to the control section (11).

3.  A luminaire comprising:

    a light-emitting element (111); and
    the power supply device (1, 2) according to any one of claims 1 and 2.

4.  The luminaire according to claim 3, further comprising:

    a detecting section (14) configured to detect an electric current flowing to the light-emitting element (111) or a voltage applied to the light-emitting element (111); and
    an error detecting section (15) configured to receive an input of a detection signal detected by the detecting section (14), compare the detection signal and a fixed threshold to thereby generate the first signal, and input the first signal to the control section (11).

# FIG.1

# FIG.2

EP 2 712 268 A2

# FIG.3

# FIG.4

# FIG.5

EP 2 712 268 A2